# EUROPÄISCHE PATENTSCHRIFT

(11) **EP 0 587 060 B1**
(45) Veröffentlichungstag und Bekanntmachung des Hinweises auf die Patenterteilung: **11.03.1998**
(21) Anmeldenummer: 93114127.9
(22) Anmeldetag: 03.09.1993
(51) Int. Cl.: C08L 63/00, C09D 163/00, C08L 23/28

(54) **Wässrige Emulsion chlorierter Polyolefine und Epoxydharze ihre Herstellung, diese enthaltende Überzugsmittel und deren Verwendung**
Aqueous emulsions of chlorinated polyolefins and epoxy resins, their production, coating compositions thereof and their use
Emulsions aqueuses de polyoléfines chlorées et de résines époxy, leur préparation et revêtements à base de celles-ci et leur utilisation

(30) Priorität: 08.09.1992 DE 4229981
(43) Veröffentlichungstag der Anmeldung: 16.03.1994
(73) Patentinhaber: Herberts Gesellschaft mit beschränkter Haftung, 42285 Wuppertal (DE)
(72) Erfinder: Diener, Wolfgang, D-42113 Wuppertal (DE); Obloh, Ronald, Dr., D-44339 Dortmund (DE); Windmann, Reinhard, D-42279 Wuppertal (DE)
(74) Vertreter: Türk, Gille, Hrabal, Leifert

(56) Entgegenhaltungen:
- EP-A- 0 324 497
- US-A- 4 981 730

## Beschreibung

Die Erfindung betrifft wäßrige Emulsionen chlorierter Polyolefine, die ein oder mehrere wasserverdünnbare Epoxidharze enthalten. Die Emulsionen sind im wesentlichen oder gänzlich frei von Emulgatoren. Sie können zur Herstellung von Überzugsmitteln, insbesondere von Zweikomponenten-Überzugsmitteln verwendet werden, die besonders zum Beschichten von Kunststoffsubstraten geeignet sind.

Zweikomponenten-Epoxidamin-Systeme auf wasserverdünnbarer Basis sind in der Industrie bekannt. Sie werden z.B. für den Korrosionsschutz verwendet. Dabei ist es möglich, über die Auswahl der Epoxidharze und über die Auswahl des Aminvernetzers die Eingenschaften des Überzugsmittels zu beeinflussen. Diese Systeme weisen gute Korrosionsschutzeigenschaften und eine gute Haftung auf Metallsubstraten auf.

In der DE-A- 38 25 754 werden Zweikomponenten-Epoxidamin-Systeme beschrieben, die mit Wasser verdünnt werden können. Es kann jedoch nur eine geringe Wassermenge zugesetzt werden, so daß der Wassergehalt unter 20 % liegt. Unter dem Gesichtspunkt des Umweltschutzes sind Zusammensetzungen dieser Art nicht besonders geeignet. Nachteilig bei diesen Überzugsmitteln ist, daß bei höherem Wassergehalt verschlechterte Filmeigenschaften erhalten werden.

In der EP-A-0 319 841 werden zweikomponentige wäßrige Epoxidaminüberzugsmittel beschrieben, die aus einer wäßrigen Dispersion von Epoxidharzen und als zweite Komponente aus einem oligomeren Urethan mit endständigen Aminogruppen bestehen. Die Wasserlöslichkeit des Urethans wird durch Neutralisation der Aminogruppen mit Säure erreicht.

Diesen wäßrigen Epoxidamin-Systemen ist gemeinsam, daß sie zwar auf Metallsubstraten gut appliziert werden können, daß jedoch auf Kunststoffsubstraten keine gute Haftung zu erzielen ist. Besonders bei der Verwendung von Polyolefinsubstraten ist die Haftung nach dem Vernetzen schlecht. Ebenso ist die Kälteschlagzähigkeit der Beschichtung und von auf diese Weise beschichteten Substraten schlecht.

Aus der DE-A- 39 10 901 und der entsprechenden W0-90/12056 sind wäßrige Beschichtungszusammensetzungen für Kunststoffteile bekannt, die Wasser, ein filmbildendes Bindemittelsystem, chlorierte Polyolefine (CPO), sowie gegebenenfalls Pigmente und Additive enthalten. Als filmbildende Bindemittel werden Acrylatharze oder Polyurethanharze beschrieben, die in wäßriger Emulsion vorliegen. Bei der Applikation des Beschichtungsmittels trocknen diese Systeme physikalisch. Zur Herstellung des Beschichtungsmittels müssen spezielle Emulgatoren, sowie ein Schmelzverfahren für die chlorierten Polyolefine und der Verfahrensschritt einer azeotropen Destillation aller organischen Lösungsmittelbestandteile durchgeführt werden. Dies ist sehr aufwendig.

In der EP-A-0 466 136 werden spezielle wäßrige Überzugsmittel zur Beschichtung von Kunststoffsubstraten beschrieben, die eine spezielle Kombination von Polyolefinharzen, Urethanharzen und Epoxidharzen enthalten. Zu ihrer Herstellung werden Emulgatoren eingesetzt. Als Olefin kann z.B. chloriertes Polypropylen verwendet werden.

Die US-A-4981730 offenbart eine wäßrige Emulsion aus a) einem wasserdispergierbaren Olefinpolymer, b) einem organischen Lösungsmittel, c) Wasser, d) Emulgatoren und gegebenenfalls e) einem Härtungsmittel bzw. Vernetzer. Es handelt sich um ein Einkomponenten-Beschichtungsmaterial das als Primer bzw. Haftvermittler eingesetzt wird. Die fakultativ eingesetzten Vernetzer, z.B. Epoxidharze, sollen nicht zu einer Vernetzung der Primer-Schicht beitragen, sondern mit entsprechenden Reaktionspartnern in der darüberliegenden Schicht reagieren.

Die EP-A-0324497 offenbart eine Beschichtungszusammensetzung, die a) Ethylen-Vinylacetat-Copolymer, b) chloriertes Polyolefin, c) Epoxidharz und d) organisches Lösungsmittel enthält.

Aufgabe der vorliegenden Erfindung ist die Bereitstellung von wäßrigen Überzugsmitteln, die zum Beschichten von Kunststofformteilen, Insbesondere in der Kraftfahrzeugindustrie geeignet sind, wobei die wäßrigen Systeme lagerstabil sind und günstige anwendungstechnische Eigenschaften haben.

Es hat sich gezeigt, daß diese Aufgabe erfindungsgemäß gelöst werden kann durch die Bereitstellung einer emulgatorfreien wäßrigen Emulsion von wasserverdünnbaren Epoxidharzen, die ein oder mehrere chlorierte Polyolefine enthält. Diese Emulsion kann zu stabilen wäßrigen Überzugsmitteln verarbeitet werden.

Ein Gegenstand der Erfindung ist somit eine wäßrige Emulsion eines oder mehrerer wasserverdünnbarer Epoxidharze, enthaltend
10 - 70 Gew.-% eines oder mehrerer wasserverdünnbarer Epoxidharze,
5 - 50 Gew.-% eines oder mehrerer organischer Lösemittel mit einem Siedepunkt von 100 - 160 °C,
10 - 70 Gew.-% Wasser,
sowie ein oder mehrere chlorierte Polyolefine im Gewichtsverhältnis Epoxidharz : chloriertes Polyolefin von 10 : 0,5 bis 10 : 4,5,
wobei sich die Gewichtsprozent jeweils auf die gesamte wäßrige Emulsion beziehen.

In den bevorzugte Ausführungsformen der wäßrigen Emulsion der Erfindung gemäß den Unteransprüchen 2 bis 6 ist diese dadurch gekennzeichnet, daß sie
- bevorzugt im wesentlichen oder gänzlich frei von Emulgatoren ist,
- keine weiteren Harze enthält,
- als Lösungsmittel aromatische Lösungsmittel enthält,
- als Epoxidharze ausschließlich selbstemulgierende Epoxidharze enthält, und
- als Epoxidharze feste Epoxidharze enthält.

Die Herstellung der wäßrigen Emulsion der Erfindung ist dadurch gekennzeichnet, daß
- eines oder mehrere wasserverdünnbare Epoxidharze, zusammen mit
- einem oder mehreren chlorierten Polyolefinen und
- einem oder mehreren organischen Lösemitteln mit einem Siedepunkt von 100 - 160 °C

in solchen Mengenverhältnissen in Wasser dispergiert werden, daß eine Emulsion mit folgender Zusammensetzung erhalten wird:
- 10 - 70 Gew.-% Epoxidharz
- 5 - 50 Gew.-% organisches Lösemittel
- 10 - 70 Gew.-% Wasser, wobei das Gewichtsverhältnis Epoxidharz : chloriertes Polyolefin von 10 : 0,5 bis 10 : 4,5 beträgt und sich die Gewichtsprozente jeweils auf die gesamte wäßrige Emulsion beziehen.

Einen weiteren Gegenstand der Erfindung bilden wäßrige Überzugsmittel, die die erfindungsgemäße wäßrige Emulsion zusammen mit einem oder mehreren wasserverdünnbaren Polyaminvernetzern, sowie gegebenenfalls Pigmenten, Füllstoffen und üblichen lacktechnischen Additiven und Lösemitteln, sowie gegebenenfalls weiterem Epoxidharz und/oder weiteren, unterschiedlichen wasserverdünnbaren Bindemitteln enthält. Die Überzugsmittel sind Zweikomponenten (2K)-Systeme, die in einer Komponente die Epoxidanteile und in der anderen Komponente die Polyaminvernetzeranteile enthalten.

Bevorzugt ist eine Komponente des obigen wäßrigen Überzugsmittel eine Komponente, die eine wäßrige Emulsion gemäß der Erfindung enthält, die unter Verwendung zumindest eines Teils der gesamten für das Überzugsmittel verwendeten Epoxidharze hergestellt wird. Bevorzugt enthält dieses wäßrige Überzugsmittel 20 - 70 Gew.-% eines oder mehrerer Epoxidharze und einen oder mehrere Polyaminvernetzer, 0,5 - 15 Gew.-% eines oder mehrerer chlorierter Polyolefine, 20 - 70 Gew.-% Wasser, sowie 10 - 40 Gew.-% eines oder mehrerer organischer Lösemittel und 0 - 53 Gew.-% eines oder mehrerer wasserverdünnbarer weiterer Bindemittel, wobei sich die Gew.-% auf 100 Gew.-% addieren und wobei das Verhältnis der reaktiven H-Atome der Polyaminvernetzer zu den Epoxidgruppen der Epoxidharze bevorzugt 0,7 : 1 bis 1,5 : 1 beträgt.

Das Verfahren zur Herstellung eines wäßrigen Überzugsmittels gemäß der Erfindung ist dadurch gekennzeichnet, daß eine wäßrige Emulsion gemäß der Erfindung mit einem oder mehreren Pigmenten, Füllstoffen, sowie gegebenenfalls üblichen lacktechnischen Additiven und gegebenenfalls weiterem Epoxidharz sowie gegebenenfalls einem oder mehreren weiteren wasserverdünnbaren Bindemitteln vermischt und ein oder mehrere wasserverdünnbare Polyaminvernetzer zum Vermischen unmittelbar vor der Anwendung bereitgestellt werden, wobei die Mengenverhältnisse so gewählt werden, daß 20 bis 70 Gew.-% Epoxidharz und Polyaminvernetzer, 0,5 bis 15 Gew.-% chloriertes Polyolefin, 20 bis 70 Gew.-% Wasser, 10 - 40 Gew.-% organische Lösemittel und 0 bis 53 Gew.-% weiteres wasserverdünnbares Bindemittel vorliegen.

Erfindungsgemäß hat es sich gezeigt, daß aus chlorierten Polyolefinen, die bevorzugt in organischem Lösemittel gelöst vorliegen, zusammen mit wasserverdünnbaren Epoxidharzen und Wasser unter gutem Dispergieren stabile wäßrige Dispersionen erhalten werden, die in wäßrigen Überzugsmitteln mit guter Haftung auf Kunststoffsubstraten eingesetzt werden können. Es hat sich gezeigt, daß die gute Haftung auf Kunststoffsubstraten erzielt werden kann, ohne daß vorher eine zusätzliche Haftbeschichtung benötigt wird. Zudem wurde festgestellt, daß durch Aufbringen der erfindungsgemäßen Überzüge die Flexibilität der beschichteten Substrate, insbesondere in der Kälte verbessert wird.

Aus den erfindungsgemäßen Emulsionen können Überzugsmittel beispielsweise dadurch bereitet werden, daß gegebenenfalls weiteres gleiches oder unterschiedliches wasserverdünnbares Epoxidharz zugesetzt wird, sowie gegebenenfalls Pigmente, Füllstoffe und weitere lackübliche Additive. Es können auch zusätzliche Bindemittel und insbesondere ein oder mehrere wäßrige oder wasserverdünnbare Polyaminharze zugesetzt werden. Die Viskosität des applikationsfertigen Überzugsmittels kann durch Verdünnen mit Wasser auf den gewünschten Bereich eingestellt werden.

Bei der Epoxid-Bindemittelkomponente der erfindungsgemäßen wäßrigen Epoxidharzdispersionen handelt es sich beispielsweise um handelsübliche wasserverdünnbare Di- oder Polyepoxide. Dies sind filmbildende Epoxidharze, die als wäßrige Dispersion oder als wasserverdünnbares Harz vorliegen.

Beispiele für solche Polyepoxide sind Polyglycidylether auf Basis von aliphatischen oder aromatischen Diolen wie Bisphenol A, Bisphenol F, Novolake oder Polyalkylenglykole, die über die funktionellen OH-Gruppen mit epoxidgruppenhaltigen Verbindungen, wie Epichlorhydrin, umgesetzt werden können.

Weitere Beispiele für Polyepoxidverbindungen sind Umsetzungsprodukte von aromatischen Diphenolen mit aromatischen Polycarbonsäuren, wie z.B. Phthal- oder Terephthalsäure oder Trimellithsäure, zu Polyestern. Diese werden mit beispielsweise 2,3-Epoxypropanol-(1) zu den Epoxidverbindungen umgesetzt.

Weitere Beispiele sind glycidylfunktionalisierte (Meth)acrylpolymere. Dabei können glycidylfunktionelle Monomere einpolymerisiert werden, wie z.B. Glycidyl-(meth)acrylat oder 1,2-Epoxybutylacrylat, oder z.B. OH-haltige Acrylate können nach der Polymerisation über die OH-Gruppe mit polyepoxygruppenhaltigen Verbindungen modifiziert werden. Die Polymere können gegebenenfalls über weitere einreagierte Comonomere in ihren Eigenschaften variiert werden.

Unter (Meth)acryl bzw. (meth)acryl werden hier Methacryl und/oder Acryl bzw. methacryl und/oder acryl verstanden.
Über einreagierte hydrophile Gruppen ionische oder nichtionische Gruppen kann eine Wasserverdünnbarkeit der Polyepoxide erreicht werden. Es ist jedoch auch möglich, daß höhermolekularen selbstemulgierenden Epoxidharzen Anteile von nicht selbstemulgierenden Epoxidharzen zugesetzt werden und gemeinsam in die Wasserphase überführt werden.

Es hat sich gezeigt, daß die erfindungsgemäßen Emulsionen frei von Emulgatoren hergestellt werden können. Es ist jedoch möglich, Emulgatoren zuzusetzen, wobei es sich als zweckmäßig erwiesen hat, den Anteil an externen Emulgatoren, bei denen es sich um niedermolekulare Emulgatoren handeln kann, möglichst gering zu halten. Die Obergrenze des Zusatzes liegt bei 0,5 Gew.-%, bevorzugt unter 0,2 Gew.-%, bezogen auf das Gesamtgewicht der Emulsion. Besonders bevorzugt sind die Emulsionen frei von Emulgatoren.

Beispiele für verwendbare wäßrige Epoxidharzdispersionen sind auch in DE-A- 36 43 751, DE-A- 38 20 301, US-A 4 886 845 oder US-A 4 987 163 beschrieben. Es handelt sich um modifizierte Epoxidharze auf Basis von aromatischen Diolen, die stabile wäßrige Dispersionen ohne zusätzlichen Emulgator ergeben.

Das Molekulargewicht (Zahlenmittel, Mn) der Epoxidharze liegt bevorzugt bis zu 50000, im Falle von Polyether-Epoxiden und Polyester-Epoxiden beträgt es bevorzugt von 500 - 10000, im Falle der Acrylat-Epoxidharze bevorzugt von 2000 - 20000. Das Epoxid-Äquivalent der Bindemittel beträgt bevorzugt 250 - 10000.

Die Epoxidharze sind so aufgebaut, daß eine Wasserverdünnbarkeit gegeben ist. Das kann durch Einreagieren von hydrophilen Gruppen geschehen, wie z.B. Polyetherstrukturen, Polyolstrukturen oder durch einreagierte ionische Gruppen. Die Epoxidharze können auch mit zusätzlichen ionischen oder nicht ionischen selbstemulgierenden Epoxidharzen in die Wasserphase überführt werden. Bevorzugt sind Polyepoxide auf Basis aromatischer Hydroxylverbindungen. Ebenfalls bevorzugt ist die Verwendung von wäßrigen Epoxidharzdispersionen zur Herstellung der erfindungsgemäßen Emulsionen. Besonders bevorzugt ist die Verwendung von Epoxidharzdispersionen, die nur selbstemulgierende Epoxidharze enthalten. Bei Verwendung der bevorzugten Epoxidharzdispersionen sind die Epoxidharze bevorzugt hochviskos oder fest.

Als chlorierte Polyolefine können beispielsweise handelsübliche Materialien eingesetzt werden. Es handelt sich insbesondere um chloriertes Polyethylen, chloriertes Polypropylen oder chlorierte Copolymere davon. Es können auch Mischungen solcher Polymerer eingesetzt werden. Sie haben einen Chlorierungsgrad von 15 - 35 Gew.-%. Das Molekulargewicht der chlorierten Polyolefine (CPO) beträgt bevorzugt 700 - 70000. Sie können als Pulver, als wäßrige Slurry oder bevorzugt als Lösung in organischen Lösungsmitteln vorliegen. Bevorzugt weisen die Lösungsmittel einen Siedebereich von 100 - 160°C auf. Als Lösungsmittel sind insbesondere Kohlenwasserstoffe, bevorzugt aromatische Kohlenwasserstoffe geeignet. Der Festkörpergehalt der bevorzugten CPO-Lösungen beträgt 20 - 60 Gew.-%.

Die wäßrige CPO/Epoxidharz-Emulsion kann hergestellt werden, indem man mindestens ein wasserverdünnbares Epoxidharz, wie vorstehend definiert, bevorzugt ein selbstemulgierendes Epoxidharz oder eine wäßrige Epoxidharz-Emulsion zusammen mit dem chlorierten Polyolefin als Pulver, Slurry oder organische Lösung, durch intensives Dispergieren mischt. Dazu werden vollentsalztes Wasser und gegebenenfalls auch noch Anteile eines oder mehrerer Lösemittel, insbesondere aromatischer Lösemittel zugegeben, um eine günstige Viskosität zum Dispergieren zu erzeugen. Das Verdünnen kann einstufig, gegebenenfalls auch mehrstufig oder kontinuierlich erfolgen. Da im allgemeinen die Viskosität zum optimalen Dispergieren höher liegt als eine geeignete Lagerviskosität, ist ein stufenweiser Prozeß günstig. Zur Dispergierung geeignet sind übliche Dispergier- und Homogenisieraggregate, wie z.B. schnellaufende Rühraggregate, Rotor/Stator-Mischer, Hochdruck-Homogenisatoren oder Ultraschallhomogenisatoren. Zur Unterstützung des Dispergierens kann die Temperatur gegebenenfalls erhöht werden, beispielsweise auf bis zu 80°C.

Im Rahmen der Erfindung hat es sich gezeigt, daß zum Emulgieren der chlorierten Polyolefine Epoxidharze verwendet werden können, wie sie für die Bereitung wäßriger Zweikomponenten-Überzugsmittel auf der Basis von Epoxidharzen und Aminharzen verwendet werden können. Auf diese Weise ist es möglich, erfindungsgemäß stabile Emulsionen bereitzustellen, die für wäßrige Überzugsmittel auf Epoxidharzbasis eingesetzt werden können. Dabei ist es möglich, in den Überzugsmitteln gegebenenfalls noch weitere Epoxidharze mitzuverwenden.

Der Anteil an chlorierten Polyolefinen liegt bevorzugt bei 5 - 45 Gew.-% bezogen auf das Epoxidharz, bevorzugt bei 20 - 40 Gew.-%. Der Lösungsmittelgehalt der erfindungsgemäßen Emulsionen beträgt bevorzugt 10 - 200 Gew.-%, bezogen auf den Festkörper des Epoxidharzes; er liegt besonders bevorzugt bei 40 - 100 Gew.-%. Der Festkörper der wäßrigen Dispersion liegt bevorzugt bei 20 - 60 Gew.-%. Bevorzugt handelt es sich bei der Dispersion um eine Öl-in-Wasser Dispersion.

Die so erhaltene wäßrige CPO/Epoxidharz-Dispersion ist lagerstabil. Sie enthält Anteile an organischem Lösungsmittel, bevorzugt an aromatischen Lösungsmitteln. Sie kann mit Wasser oder anderen Bindemitteln oder Dispersionen verdünnt werden. Werden auch Pigmente zugefügt, können daraus dann ohne zusätzliche vernetzende Komponente gegebenenfalls auch physikalisch trocknende Haftgrundierungen für Kunststoffsubstrate hergestellt werden. Werden z.B. weitere Epoxidharzanteile zugesetzt, ist es möglich, zusammen mit basischen Katalysatoren auch vernetzende Überzugsmittel auf Basis von Epoxidharz/CPO-Dispersionen herzustellen. Ebenso ist es möglich, durch Zusatz von Polyisocyanaten vernetzende Zweikomponenten-Überzugsmittel aus diesen Epoxid/CPO-Dispersionen herzustellen.

Die erfindungsgemäßen CPO/Epoxid-Dispersionen sind stabil. Aus ihnen können Zweikomponenten (2K)-Epoxidharz-Aminvernetzer-Überzugsmittel hergestellt werden. Als Epoxidharz-Komponente oder als Teil davon wird die erfindungsgemäß hergestellte CPO/Epoxidharz-Dispersion verwendet. Sie kann dazu gegebenenfalls mit weiteren gleichen oder verschiedenen wasserverdünnbaren Epoxidharzen versetzt werden. Bevorzugt sind die Epoxidharze dabei vom gleichen Typ, wie die für die Herstellung der Dispersionen verwendeten Epoxidharze, beispielsweise die vorstehend beschriebenen Epoxidharze.

Zur Herstellung der Zweikomponenten-Überzugsmittel können Polyaminvernetzer verwendet werden, wie sie in der Literatur beispielsweise bereits beschrieben werden. Sie können in weiten Grenzen variiert werden. Sie enthalten reaktive Aminogruppen und gegebenenfalls weitere, die Wasserlöslichkeit erhöhende funktionelle Gruppen. Die Polyamine, die als Vernetzer geeignet sind, können auch filmbildende Eigenschaften haben. Es kann sich bei den Polyaminvernetzern somit um niedermolekulare Polyamine oder um Polyaminharze handeln.

Der Vernetzer muß eine ausreichende Anzahl von reaktiven Gruppen aufweisen. Das Äquivalentgewicht pro aktivem H-Atom liegt bevorzugt bei 50 bis 500, besonders bevorzugt bei 100 bis 400. Das Molekulargewicht kann in weiten Grenzen schwanken, solange Reaktivität und Wasserlöslichkeit gegeben sind. Bevorzugt sind zahlenmittlere Molekulargewichte (Mn) von 250 bis 20000.

Die Polyaminvernetzerkomponente wird so gewählt, daß Wasserverdünnbarkeit oder Wasserlöslichkeit gegeben ist. Das kann durch die Anzahl von polaren Gruppen, wie beispielsweise OH-Gruppen, Aminogruppen, Harnstoffgruppen oder Polyetherstrukturen erfolgen. Die Vernetzerkomponente kann entweder als wäßrige Dispersion vorliegen oder sie wird als konzentrierte Form bei der Verarbeitung mit Wasser verdünnt. Bevorzugt sind Polyamine auf aliphatischer Basis.

Geeignete Polyamine sind beispielsweise Diamine und Amine mit mehr als 2 Aminogruppen, wobei die Aminogruppen primär und/oder sekundär sein können. Darüber hinaus sind als Polyamine Addukte geeignet, die aus Polyaminen mit mindestens 2 primären Aminogruppen bestehen und über weitere funktionelle Gruppen modifiziert werden können. Weiterhin sind als Polyamine Polymere geeignet, in die die aminofunktionellen Gruppen erst nachträglich durch Reaktion eingeführt wurden.

Beispiele für geeignete Polyamine sind in den EP-A 0 240 083 oder EP-A 0 346 982 beschrieben. Beispiele hierfür sind aliphatische und/oder cycloaliphatische Amine mit 6-24 C-Atomen, die 2-10 primäre Aminogruppen und 0-5 sekundäre Aminogruppen enthalten. Repräsentative Beispiele hierfür sind Hexamethylendiamin, 1,2-Diaminocyclohexan, Isophorondiamin, Diethylentriamin oder Polyetherpolyamine.

Die Polyaminharze können beispielsweise auch für übliche Polyamine auf der Basis von modifizierten polyfunktionellen Amin-Komponenten mit dioder polyfunktionellen Epoxyverbindungen sein, die hergestellt werden unter Verwendung von beispielsweise Diglycidyl- oder Polyglycidylethern auf Basis von Bisphenol A oder Bisphenol F, Polyglycidylethern von Phenolformaldehyd oder Novolaken; Glycidylethern von Fettsäure mit 6-24 C-Atomen, epoxidierten Polybutadienen oder glycidylgruppenhaltigen Harzen wie Polyester oder Polyurethane, die eine oder mehrere Glycidylgruppen im Molekül enthalten. Diese Polyepoxidharze werden dann mit Di- oder Polyaminen umgesetzt, wobei ein Überschuß an Aminogruppen vorliegen muß. Es entstehen wasserverdünnbare Bindemittel.

Weiterhin können Polyamin-Isocyanataddukte eingesetzt werden. Dabei sind als Isocyanate die üblichen aliphatischen cycloaliphatischen und/oder aromatischen Di- oder Polyisocyanate geeignet. Die Umsetzung der Isocyanate mit den Polyaminen erfolgt beispielsweise in einem Temperaturbereich von 20 - 80°C, gegebenenfalls unter Zugabe geringer Mengen eines Katalysators. Es werden dabei die Polyamine in solcher Menge eingesetzt, daß nach der Reaktion noch eine ausreichende Anzahl Aminogruppen vorhanden ist.

Beispiele für acryloylungesättigte Verbindungen zum Herstellen von erfindungsgemäß verwendbaren Polyaminaddukten sind in der US-A-4 303 563 beschrieben. Beispiele für Polyamidoamine sind in der EP-A-0 262 720 beschrieben. Weitere Methoden zur Synthese von aminfunktionalisierten Härtern sind in der EP-A-0 002 801 sowie der EP-A 0 179 954 beschrieben. Es handelt sich dabei um Polyamine, die mit ungesättigten Verbindungen oder mit Carbonsäuren modifiziert wurden.

Weiterhin ist es möglich den Überzugsmitteln Anteile von weiteren unterschiedlichen wasserverdünnbaren Bindemitteln zuzusetzen, z.B. wasserverdünnbare Polyurethanharze oder Acrylatharze oder Polyesterharze. Diese zusätzlichen Bindemittel sollen nicht mit dem Vernetzungssystem Epoxid/Amin reagieren. Bevorzugt sind wäßrige Polymerdispersionen, besonders bevorzugt selbst- oder fremdemulgierte Polyurethandispersionen. Die zusätzlichen Bindemittel können in der wäßrigen Epoxidharz-Komponente oder in der wasserverdünnbaren Aminkomponente oder in beiden vorliegen. Dabei können auch unterschiedliche Zusatzbindemittel in beiden Komponenten zugesetzt werden. Es ist auch möglich, jedoch nicht notwendig, in der Wärme reagierende Vernetzer, wie z.B. blockierte Isocyanate oder Aminoplastharze zuzusetzen. Diese haben dan jecoch im allgemeinen keine vernetzende Funktion.

Die erfindungsgemäßen Überzugsmittel werden als Zweikomponenten-System formuliert; das heißt die beiden Komponenten werden zunächst bereitgestellt und unmittelbar vor der Anwendung miteinander vermischt. Eine Komponente der erfindungsgemäßen Überzugsmittel enthält die Epoxidharze; die zweite Komponente enthält die Aminharze.

Die Epoxidharz-Komponente enthält die erfindungsgemäßen Dispersionen und somit auch die CPO-Komponente. Weiterhin können, wie erwähnt, andere oder gleiche Epoxidharze zugemischt werden, gegebenenfalls auch Pigmente, Bindemittel und weitere lackübliche Additive, wie z.B. Entschäumer, Netzmittel, Antikratermittel. Die zugesetzten Stoffe müssen mit der CPO/Epoxidharz-Dispersion verträglich sein. Die Epoxidharz-Dispersion enthält, wie vorstehend erläutert, ein oder mehrere organische, bevorzugt aromatische Lösemittel.

Die Pigmente und die zugefügten Bestandteile werden gut dispergiert, gegebenenfalls auch vermahlen. Die Verfahren dafür sind dem Fachmann geläufig. Gegebenenfalls werden die Pigmente in einem Netzmittel separat vermahlen, damit die Emulsion nicht zerstört wird. Die Viskosität der Epoxidharz-Komponente wird so eingestellt, daß eine Sedimentation oder eine Phasentrennung bei längerer Lagerung nicht eintritt.

Die zweite Komponente, die Vernetzerkomponente, enthält das Polyaminharz. Sie ist entweder wasserverdünnbar oder liegt als wäßrige Komponente vor. In der Polyaminkomponente können gegebenenfalls Pigmente, Additive oder weitere Harzbestandteile enthalten sein. Es handelt sich bei den Harzbestandteilen prinzipiell um die gleichen Bestandteile, die auch in der Epoxidharz-Komponente zusätzlich enthalten sein können. Sie liegen wasserverdünnbar oder bevorzugt wäßrig vor und enthalten keine mit der Aminkomponente reaktiven Gruppen. Gegebenenfalls kann in dieser Komponente zur Erhöhung der Verträglichkeit beider Überzugsmittelkomponenten ebenfalls noch eine geringe Menge einer CPO-Lösung zugesetzt werden.

Wie erwähnt können sowohl die Epoxidharz-Komponente als auch die Polyaminharz-Komponente weitere Harzbestandteile als zusätzliche Bindemittel enthalten. Beispiele für derartige Zusatzbindemittel sind ein oder mehrere carboxylgruppenhaltige Polyurethanharze ein oder mehrere nicht-ionische, selbstemulgierbare Polyurethanharze, sowie selbstemulgierende Polyurethanharze mit einreagierten anionischen Gruppen, z.B. Carboxylgruppen. Solche können zumindest teilweise mit den Aminogruppen der Vernetzerkomponente neutralisiert werden. Eine besonders bevorzugte Ausführungsform sind selbstemulgierende, nicht ionische Polyurethanharze, die hydrophile Gruppen, wie z.B. Polyethergruppen, aufweisen.

Als Pigmente können übliche Pigmente und Füllstoffe zugesetzt werden, nämlich solche auf organischer und anorganischer Basis, wie z.B. Titandioxid, Aluminiumsilikat, Bariumsulfat oder Siliciumdioxid. Lackübliche Additive sind beispielsweise lackübliche Hilfsstoffe, z.B. Antischaummittel, Verlaufsmittel, Katalysatoren oder Antikratermittel. Über derartige Hilfsstoffe können gezielt verschiedene Eigenschaften des

Überzugsmittels, wie z.B. Reaktivität oder Verlauf, eingestellt werden. Ebenso können die Herstellungs-, Verarbeitungs- und Lagerungsbedingungen beeinflußt werden.

Die Pigmente können in der Aminkomponente oder in einem zusätzlichen Bindemittel, das dann als Pigmentanreibeharz dient, dispergiert werden. Das Verfahren zum Dispergieren von Pigmenten und Additiven ist dem Fachmann bekannt.

Zur Herstellung der Überzugsmittel wird eine Mischung der beiden Komponenten im allgemeinen so durchgeführt, daß das Verhältnis der reaktiven H-Atome der Vernetzerkomponente zu den Epoxidgruppen der Epoxidharzkomponente von 0,7 : 1 - 1,5 : 1, bevorzugt von 0,9 : 1 - 1,3 : 1 vorliegt. Die zusätzlichen Bindemittel sind im wesentlichen an der Vernetzerreaktion nicht beteiligt.

Nach dem Vermischen der Komponenten kann gegebenenfalls durch Zufügen von Wasser die Viskosität des Überzugsmittels eingestellt werden. Als Applikationsarten seien beispielsweise Spritzen, Streichen, Tauchen oder Rollen erwähnt.

Nach der Applikation vernetzt das Überzugsmittel bei Temperaturen zwischen 10 und 120°C. Bevorzugt ist ein Temperaturbereich von 20 - 80°C. Das Vernetzungsverhalten kann durch Zufügen eines Katalysators beschleunigt werden.

Das Überzugsmittel enthält bevorzugt 10 bis 40 Gew.-% eines oder mehrerer organischer Lösemittel und 0,5 bis 15 Gew.-% CPO. Die Menge an filmbildenden Epoxidharz und filmbildender Aminkomponente beträgt bevorzugt 10 bis 70 Gew.-%, besonders bevorzugt 15 bis 55 Gew.-%. Der Anteil an zusätzlichem Bindemittel beträgt bevorzugt, bezogen auf Epoxidharz- und Aminharzanteil, bis zu 75 %, was einem Gesamtanteil bis zu 55 Gew.-% entspricht. Der Anteil an Wasser liegt bei 20 bis 70 Gew.-%. Der Pigmentanteil, bezogen auf den gesamten Bindemittelgehalt, liegt z.B. zwischen 0 und 200 Gew.-%.

Eine bevorzugte Ausführungsform enthält 20 - 35 % Lösemittel, 2 - 10 % CPO, 20 - 45 % Epoxidharz und Aminkomponente sowie 35 - 60 % Wasser und 10 - 150 % Pigment, letzteres bezogen auf den Bindemittelgehalt.

Als Substrate dienen bevorzugt Kunststoffsubstrate. Beispiele dafür sind modifizierte oder nichtmodifizierte Polyolefine, insbesondere Polyethylen- und Polypropylensubstrate, Polycarbonat, Polyamid, ABS- Polymere, Polyurethane oder Polyester. Je nach Temperaturempfindlichkeit des Substrates kann die Vernetzungstemperatur des Überzugsmittels gewählt werden.

Nach dem Vernetzen erhält man homogen beschichtete Kunststoffsubstrate mit einer glatten, störungsfreien Oberfläche. Die Haftung zum Substrat ist gut. Die mechanischen Eigenschaften des lackierten Gegenstandes werden nicht negativ beeinflußt, insbesondere auch nicht in der Kälte. Die Flexibilität bzw. das Bruchverhalten der Lackschicht auf dem Substrat werden deutlich gesteigert. Die erhaltenen Überzüge zeichnen sich durch eine hohe Wasserfestigkeit des Films aus.

Die so erhaltenen Überzüge können mit geeigneten Pigmenten als Ein-Schicht-Decklacküberzüge ausgebildet sein. Weiterhin ist es möglich, auf die Überzüge einen oder mehrere weitere Überzüge, z.B. Klarlack-Überzüge, zu applizieren. Die so erhaltenen Mehrschicht-Aufbauten zeigen eine gute Haftung zum Substrat und eine gute Kälteelastizität. Sie können ohne zusätzlichen Haftprimer verwendet werden. Die Überzugsmittel sind besonders geeignet zur Verwendung als Basisschicht in der KraftfahrzeugIndustrie. Sie können jedoch auch zum Beschichten von anderen, besonders temperaturempfindlichen Kunststoffsubstraten eingesetzt werden.

Die folgenden Beispiele dienen zur Erläuterung der Erfindung. Teile (T), sowie Prozentangaben, beziehen sich, falls nicht anders angegeben, jeweils auf das Gewicht.

### A. Herstellung von Emulsionen chlorierter Polyolefine (CPO):

Die folgenden Emulsionen werden mit einem Flügelrührer bei 23°C mit etwa 9000 U/min. und exzentrischer Rührgeometrie hergestellt. Es wird darauf geachtet, daß keine toten Zonen in dem zu dispergierenden Material entstehen. Die Lösungen der chlorierten Polyolefine werden jeweils langsam zugegeben.

### Beispiel 1

30 T einer 25 %igen Lösung eines chlorierten Polypropylens mit einem Chlorgehalt von 18 % werden zu 50 T einer 54 % Dispersion eines Epoxidharzes nach DE-A- 38 20 301 Beispiel III.7 unter gutem Rühren zugemischt. (Festkörper 43 %).

### Beispiel 2

27,0 T einer 25 %igen Lösung eines chlorierten Polypropylens mit einem Chlorgehalt von 18 % werden zu 50,5 T einer 54 % Dispersion eines Epoxidharzes nach DE-A- 38 20 301 Beispiel III.7 und 2,5 T Xylol unter gutem Rühren zugemischt. (Festkörper 42,5 %).

### Beispiel 3

32 T einer 32,5 %igen Lösung eines chlorierten Polypropylens mit einem Chlorgehalt von 18 % werden zu 48 T einer 54 % Dispersion eines Epoxidharzes nach DE-A- 38 20 301 Beispiel III.3 unter gutem Rühren zugemischt (Festkörper 45,5 %).

### Beispiel 4

75 T einer 10 %igen Lösung eines chlorierten Polypropylens mit einem Chlorgehalt von 27 % werden zu 50 T einer 55,5 % Dispersion eines Epoxidharzes nach DE-A- 36 43 751 Beispiel II.1 sowie 14 T vollentsalztem Wasser unter gutem Rühren zugemischt (Festkörper 27 %).

Die entstehenden Epoxidharze/CPO-Emulsionen sind teilweise pastös und nicht mehr dünnviskos. Alle zeigen eine hohe Lagerstabilität und keine Phasenseparation.

### B. Herstellung einer pigmentierten Polyaminharzkomponente

### Beispiel 5

Es werden 4,5 % eines aliphatischen Polyamins (H-Äquivalent 245, Viskosität 7000 - 9000 mPas, 100 %ig; ^{R}Beckopox-Spezialhärter VEH 2672) mit 2,0 % Dipropylendiglykol, 6,0 % Wasser und 2,0 % eines handelsüblichen Netzmittels homogenisiert. Dazu werden unter gutem Rühren 35,0 % Titandioxid, 3,5 % Aluminiumsilikat sowie 0,2 % Ruß zugefügt und gründlich bei Kühlung dispergiert. Nach Zufügen von 0,5 % handelsüblichen Antischaummittel und 4,0 % Wasser zum Einstellen der Viskosität wird 20 min. bei 40°C vermahlen auf einer Perlmühle. Dazu wird unter gutem Rühren eine Mischung aus 6,0 Teilen eines handelsüblichen CPO (40 % in Xylol) mit 14,0 % Xylol zugegeben, in die 9,5 % eines handelsüblichen Polyamins (H-Äquivalent 160, Viskosität 12 530 mPas; ^{R}Beckopox-Spezialhärter EH 623) zusammen mit 10,5 % Wasser zugemischt wurden. In der fertigen Komponente wird mit 2 % Wasser die Viskosität eingestellt.

### Beispiel 6

Es werden 4,5 % eines aliphatischen Polyamins wie in Beispiel 5 (H-Äquivalent 245) mit 2,0 % Dipropylendiglykol, 6,0 % Wasser und 2,0 % eines handelsüblichen Netzmittels homogenisiert. Dazu werden unter gutem Rühren 35,0 % Titandioxid, 3,5 % Aluminiumsilikat sowie 0,2 % Ruß zugefügt und gründlich bei Kühlung dispergiert. Nach Zufügen von 0,5 % handelsüblichem Antischaummittel und 4,0 % Wasser zum Einstellen der Viskosität wird 20 min. bei 40°C vermahlen auf einer Perlmühle. Dazu wird unter gutem Rühren eine Mischung aus 6,0 Teilen eines handelsüblichen CPO (40 % in Xylol) gemischt mit 14,0 % Xylol zugegeben, in die 6,8 % eines handelsüblichen Polyamins (H-Äquivalent 115, Viskosität 20.000 mPas, 80 %; ^{R}Beckopox-Spezialhärter VEH 2133) zusammen mit 13,2 % Wasser eingerührt wurden und dann wird mit 2 % Wasser die Viskosität der Mischung eingestellt.

### Beispiel 7

Es werden 4,5 % eines aliphatischen Polyamins nach Beispiel 5 (H-Äquivalent 245) mit 2,0 % Dipropylendiglykol, 6,0 % Wasser und 2,0 % eines handelsüblichen Netzmittels homogenisiert. Dazu werden unter gutem Rühren 35,0 % Titandioxid, 3,5 % Aluminiumsilikat sowie 0,2 % Ruß zugefügt und gründlich bei Kühlung dispergiert. Nach Zufügen von 0,5 % handelsüblichem Antischaummittel und 4,0 % Wasser zum Einstellen der Viskosität wird 20 min. bei 40°C vermahlen auf einer Perlmühle. Dazu werden 9,5 % eines handelsüblichen Polyamins (H-Äquivalent 160, Viskosität 12 530 mPas, 80 %; ^{R}Beckopox-Spezialhärter EH 623) sowie stufenweise abwechselnd 16,0 % Xylol und 15,0 % Wasser zugemischt und mit 1,8 % Waser die Viskosität eingestellt.

### C. Herstellung von Überzugsmitteln:

### Beispiel 8

80 T einer Emulsion nach Beispiel 2 werden mit 15 T Wasser und 5 T eines Epoxidharzes nach DE-A- 36 43 751 Beispiel II.1 homogen gemischt. Zu 50 T dieser Mischung werden 50 T einer Mischung nach Beispiel 5 gegeben. Es wird mit ca. 2 T Wasser auf Spritzviskosität eingestellt.

### Beispiel 9

80 T einer Emulsion nach Beispiel 3 werden mit 20 T Wasser homogen gemischt.
Zu 50 T dieser Komponente werden 50 T einer Mischung nach Beispiel 5 gegeben. Es wird mit ca. 2 T Wasser auf Spritzviskosität eingestellt.

### Beispiel 10

80 T einer Emulsion nach Beispiel 3 werden mit 15 T Wasser und 5 T eines Epoxidharzes nach DE-A- 36 43 751 Beispiel II.1 homogen gemischt. Zu 50 T dieser Komponente werden 50 T einer Mischung nach Beispiel 6 gegeben. Es wird mit ca. 2 T Wasser auf Spritzviskosität eingestellt.

### Beispiel 11

80 T einer Emulsion nach Beispiel 2 werden mit 15 T Wasser und 5 T eines Epoxidharzes nach DE-A- 38 20 301 Beispiel III.7 homogen gemischt.

Zu 50 T dieser Komponente werden 50 T einer Mischung nach Beispiel 7 gegeben. Es wird mit wenig Wasser auf Spritzviskosität eingestellt.

### D. Herstellung von Haftgrundierungen:

Die resultierenden Grundierungsüberzugsmittel werden mittels Spritzapplikation auf das entfettete Substrat (Hostalen PPN 8018B ^{R} der Hoechst AG) in ca. 30 - 40 µm Trockenfilmdicke aufgebracht. Der Film wird nach 10 min. Ablüften 30 min. bei 90°C getrocknet. Danach kann ein handelsüblicher weiterer Lackaufbau erfolgen.

| | |
|---|---|
| Lackaufbau | 35 µm Zweikomponenten-Grundierung gemäß Beispiel 8 - 11 |
| | 15 µm handelsüblicher Wasserbasislack Diamantsilber 65 120 (Herberts GmbH) |
| | 35 µm handelsüblicher Zweikomponenten-Klarlack (47891 der Herberts GmbH) |

Die Prüfung auf Feuchtraumbeständigkeit (DIN 50017, Kondenswasserprüfklimate, Haftung zu Nachfolgeschichten) und die Elastizität im Durchstoß (DIN 53443 Teil 2, Verbund zum Substrat) auch bei - 20°C zeigen ein gutes Ergebnis.

Ein Vergleichsversuch wurde analog Beispiel 11, jedoch ohne CPO-Polymer im Überzugsmittel durchgeführt. Ein weiterer wurde so durchgeführt, daß der Lösungsmittelgehalt an Xylol unter 5 % liegt. Beide Versuche zeigten ein wesentlich schlechteres Ergebnis in der Haftungsprüfung.

## Patentansprüche

1. Wäßrige Emulsion eines oder mehrerer wasserverdünnbarer Epoxidharze, enthaltend
10 - 70 Gew.-% eines oder mehrerer wasserverdünnbarer Epoxidharze,
5 - 50 Gew.-% eines oder mehrerer organischer Lösemittel mit einem Siedepunkt von 100 - 160 °C,
10 - 70 Gew.-% Wasser,
sowie ein oder mehrere chlorierte Polyolefine im Gewichtsverhältnis Epoxidharz : chloriertes Polyolefin von 10 : 0,5 bis 10 : 4,5,
wobei sich die Gewichtsprozent jeweils auf die gesamte wäßrige Emulsion beziehen.

2. Wäßrige Emulsion nach Anspruch 1, dadurch gekennzeichnet, daß sie im wesentlichen frei von Emulgatoren ist.

3. Wäßrige Emulsion nach Anspruch 1 oder 2, dadurch gekennzeichnet, daß sie keine weiteren Harze enthält.

4. Wäßrige Emulsion nach Anspruch 1, 2 oder 3, dadurch gekennzeichnet, daß die enthaltenen Lösemittel aromatische Lösemittel sind.

5. Wäßrige Emulsion nach einem der Ansprüche 1 bis 4, dadurch gekennzeichnet, daß die Epoxidharze ausschließlich selbstemulgierende Epoxidharze sind.

6. Wäßrige Emulsion nach einem der Ansprüche 1 bis 5, dadurch gekennzeichnet, daß die Epoxidharze fest sind.

7. Wäßriges Überzugsmittel auf der Basis eines oder mehrerer wasserverdünnbarer Epoxidharze, sowie gegebenenfalls Pigmente, Füllstoffe und üblicher lacktechnischer Additive, dadurch gekennzeichnet, daß es eine wäßrige Emulsion gemäß einem der Ansprüche 1 bis 6 sowie ein oder mehrere wasserverdünnbare Polyaminvernetzer enthält und als Zweikomponenten-System vorliegt, wobei eine Komponente die Epoxidharze und die andere die Polyaminvernetzer enthält.

8. Wäßriges Überzugsmittel nach Anspruch 7, dadurch gekennzeichnet, daß eine Komponente eine wäßrige Emulsion nach einem der Ansprüche 1 bis 6 enthält, die unter Verwendung zumindest eines Teils der gesamten für das Überzugsmittel verwendeten Epoxidharze hergestellt wurde.

9. Wäßriges Überzugsmittel nach Anspruch 8, dadurch gekennzeichnet, daß es 20 - 70 Gew.-% eines oder mehrerer Epoxidharze und einen oder mehrere Polyaminvernetzer, 0,5 - 15 Gew.-% eines oder mehrerer chlorierter Polyolefine, 20 - 70 Gew.-% Wasser, sowie 10 - 40 Gew.-% eines oder mehrerer organischer Lösemittel und 0 - 53 Gew.-% eines oder mehrerer wasserverdünnbarer weiterer Bindemittel enthält, wobei sich die Gew.-% auf 100 Gew.-% addieren und wobei das Verhältnis der reaktiven H-Atome der Polyaminvernetzer zu den Epoxidgruppen der Epoxidharze bevorzugt 0,7 : 1 bis 1,5 : 1 beträgt.

10. Wäßriges Überzugsmittel nach Anspruch 9, dadurch gekennzeichnet, daß die weiteren Bindemittel ein oder mehrere Polyurethanharze umfassen.

11. Verfahren zur Herstellung einer wäßrigen Emulsion nach einem der Ansprüche 1 bis 6, dadurch gekennzeichnet, daß
- eines oder mehrere wasserverdünnbare Epoxidharze, zusammen mit
- einem oder mehreren chlorierten Polyolefinen und
- einem oder mehreren organischen Lösemitteln mit einem Siedepunkt von 100 - 160 °C
in solchen Mengenverhältnissen in Wasser dispergiert werden, daß eine Emulsion mit folgender Zusammensetzung erhalten wird:
- 10 - 70 Gew.-% Epoxidharz
- 5 - 50 Gew.-% organisches Lösemittel
- 10 - 70 Gew.-% Wasser, wobei das Gewichtsverhältnis Epoxidharz : chloriertes Polyolefin von 10 : 0,5 bis 10 : 4,5 beträgt und sich die Gewichtsprozente jeweils auf die gesamte wäßrige Emulsion beziehen.

12. Verfahren nach Anspruch 11, dadurch gekennzeichnet, daß als Lösemittel eines oder mehrere aromatische Lösemittel verwendet werden.

13. Verfahren nach Anspruch 11 oder 12, dadurch gekennzeichnet, daß die Epoxidharze in Form einer wäßrigen Epoxidharz-Dispersion eingesetzt werden.

14. Verfahren zur Herstellung eines wäßrigen Überzugsmittels nach einem der Ansprüche 7 bis 10, dadurch gekennzeichnet, daß eine wäßrige Emulsion nach einem der Ansprüche 1 bis 6 mit einem oder mehreren Pigmenten, Füllstoffen, sowie gegebenenfalls üblichen lacktechnischen Additiven und gegebenenfalls weiterem Epoxidharz sowie gegebenenfalls einem oder mehreren weiteren wasserverdünnbaren Bindemitteln vermischt und ein oder mehrere wasserverdünnbare Polyaminvernetzer zum Vermischen unmittelbar vor der Anwendung bereitgestellt werden, wobei die Mengenverhältnisse so gewählt werden, daß 20 bis 70 Gew.-% Epoxidharz und Polyaminvernetzer, 0,5 bis 15 Gew.-% chloriertes Polyolefin, 20 bis 70 Gew.-% Wasser, 10 - 40 Gew.-% organische Lösemittel und 0 bis 53 Gew.-% weiteres wasserverünnbares Bindemittel vorliegen.

15. Verfahren nach Anspruch 14, dadurch gekennzeichnet, daß zumindest ein Teil der Komponenten, mit Ausnahme der Epoxidharze, mit der Polyaminvernetzerkomponente vermischt wird.

16. Verfahren zur Herstellung eines wäßrigen Überzugsmittels nach Anspruch 14 oder 15, dadurch gekennzeichnet, daß als weitere Bindemittel ein oder mehrere carboxylgruppenhaltige Polyurethanharze zugemischt werden.

17. Verfahren zur Herstellung eines wäßrigen Überzugsmittels nach Anspruch 14 oder 15, dadurch gekennzeichnet, daß als weitere Bindemittel ein oder mehrere nicht-ionische, selbstemulgierbare Polyurethanharze zugemischt werden.

18. Verwendung der wäßrigen Emulsionen nach einem der Ansprüche 1 bis 6, zur Herstellung von wäßrigen Überzugsmitteln.

19. Verwendung der wäßrigen Überzugsmittel nach einem der Ansprüche 7 bis 10 zur Herstellung von Grundierungen für Mehrschichtlackierungen.

20. Verwendung der Überzugsmittel nach einem der Ansprüche 7 bis 10 zur Beschichtung von Kunststoffsubstraten.

21. Verwendung der wäßrigen Überzugsmittel nach einem der Ansprüche 7 bis 10 zur Beschichtung von Polyolefinsubstraten, insbesondere von solchen, die ganz oder teilweise aus Polypropylen bestehen.

22. Kunststoffsubstrate, beschichtet mit einem Überzugsmittel nach einem der Ansprüche 7 bis 10.

## Claims

1. An aqueous emulsion of one or more water-thinnable epoxy resins, containing
| | |
|---|---|
| 10 - 70 % by weight of | one or more water-thinnable epoxy resins, |
| 5 - 50 % by weight of | one or more organic solvents with a boiling point of 100 - 160°C, |
| 10 - 70 % by weight of | water, |
as well as one or more chlorinated polyolefines, in a ratio by weight of epoxy resin: chlorinated polyolefine of 10 : 0.5 to 10 : 4.5,
wherein the percentages by weight are given with respect to the total aqueous emulsion in each case.

2. An aqueous emulsion according to claim 1, characterised in that it is substantially free from emulsifiers.

3. An aqueous emulsion according to claim 1 or 2, characterised in that it contains no further resins.

4. An aqueous emulsion according to claims 1, 2 or 3, characterised in that the solvents which are contained are aromatic solvents.

5. An aqueous emulsion according to any one of claims 1 to 4, characterised in that the epoxy resins are exclusively self-emulsifying epoxy resins.

6. An aqueous emulsion according to any one of claims 1 to 5, characterised in that the epoxy resins are solid.

7. An aqueous coating medium based on one or more water-thinnable epoxy resins, and optionally on pigments, extenders and customary lacquer technology additives, characterised in that it contains an aqueous emulsion according to any one of claims 1 to 6 as well as one or more water-thinnable polyamine crosslinking agents and is present as a two-component system, wherein one component contains the epoxy resins and the other contains the polyamine crosslinking agents.

8. An aqueous coating medium according to claim 7, characterised in that one component contains an aqueous emulsion according to any one of claims 1 to 6 which has been produced using at least part of the total epoxy resins used for the coating medium.

9. An aqueous coating medium according to claim 8, characterised in that it contains 20 - 70 % by weight of one or more epoxy resins and one or more polyamine crosslinking agents, 0.5 - 15 % by weight of one or more chlorinated polyolefines, 20 - 70 % by weight of water, as well as 10 - 40 % by weight of one or more organic solvents and 0 - 53 % by weight of one or more further water-thinnable binder vehicles, wherein the percentages by weight add up to 100 % by weight and wherein the ratio of the reactive H atoms of the polyamine crosslinking agents to the epoxide groups of the epoxy resins is preferably 0.7 : 1 to 1.5 : 1.

10. An aqueous coating medium according to claim 9, characterised in that the further binder vehicles comprise one or more polyurethane resins.

11. A method of producing an aqueous emulsion according to any one of claims 1 to 6, characterised in that
- one or more water-thinnable epoxy resins, together with
- one or more chlorinated polyolefines, and
- one or more organic solvents with a boiling point of 100 - 160°C,
are dispersed in water in quantitative ratios such that an emulsion of the following composition is obtained:
- 10 - 70 % by weight of epoxy resin,
- 5 - 50 % by weight of organic solvents, and
- 10 - 70 % by weight of water, wherein the ratio by weight of epoxy resin : chlorinated polyolefine is from 10 : 0.5 to 10 : 4.5 and the percentages by weight are given with respect to the total aqueous emulsion in each case.

12. A method according to claim 11, characterised in that one or more aromatic solvents are used as solvents.

13. A method according to claim 11 or 12, characterised in that the epoxy resins are used in the form of an aqueous epoxy resin dispersion.

14. A method of producing an aqueous coating medium according to any one of claims 7 to 10, characterised in that an aqueous emulsion according to any one of claims 1 to 6 is mixed with one or more pigments and extenders, and is also optionally mixed with customary lacquer technology additives and optionally with further epoxy resin, and is also optionally mixed with one or more further water-thinnable binder vehicles, and one or more water-thinnable polyamine crosslinking agents are prepared for mixing immediately before application, wherein the quantitative ratios are selected so that 20 to 70 % by weight of epoxy resin and polyamine crosslinking agent, 0.5 to 15 % by weight of chlorinated polyolefine, 20 to 70 % by weight of water, 10 - 40 % by weight of organic solvent and 0 to 53 % by weight of further water-thinnable binder vehicle are present.

15. A method according to claim 14, characterised in that at least part of the components, with the exception of the epoxy resins, is mixed with the polyamine crosslinking component.

16. A method of producing an aqueous coating medium according to claim 14 or 15, characterised in that one or more polyurethane resins which contain carboxyl groups are admixed as further binder vehicles.

17. A method of producing an aqueous coating medium according to claim 14 or 15, characterised in that one or more non-ionic, self-emulsifying polyurethane resins are admixed as further binder vehicles.

18. The use of the aqueous emulsions according to any one of claims 1 to 6 for the production of aqueous coating media.

19. The use of the aqueous coating media according to any one of claims 7 to 10 for the production of primers for multi-layer coatings.

20. The use of the coating media according to any one of claims 7 to 10 for the coating of plastics substrates.

21. The use of the aqueous coating media according to any one of claims 7 to 10 for the coating of polyolefine substrates, particularly those which partly or completely consist of polypropylene.

22. Plastics substrates coated with a coating medium according to any one of claims 7 to 10.

## Revendications

1. Emulsion aqueuse d'une ou plusieurs résines époxy pouvant être diluées avec de l'eau, contenant
10-70 % en poids d'une ou plusieurs résines époxy pouvant être diluées avec de l'eau,
5-50 % en poids d'un ou plusieurs solvants organiques ayant un point d'ébullition de 100-160°C,
10-70 % en poids d'eau,
ainsi qu'une ou plusieurs polyoléfines chlorées, en un rapport pondéral résine époxy/polyoléfine chlorée allant de 10:0,5 à 10:4,5,
les pourcentages en poids se rapportant dans chaque cas à l'émulsion aqueuse totale.

2. Emulsion aqueuse selon la revendication 1, caractérisée en ce qu'elle est pratiquement exempte d'émulsifiants.

3. Emulsion aqueuse selon la revendication 1 ou 2, caractérisée en ce qu'elle ne contient pas d'autres résines.

4. Emulsion aqueuse selon la revendication 1, 2 ou 3, caractérisée en ce que les solvants contenus sont des solvants aromatiques.

5. Emulsion aqueuse selon l'une des revendications 1 à 4, caractérisée en ce que les résines époxy sont exclusivement des résines époxy autoémulsifiantes.

6. Emulsion aqueuse selon l'une des revendications 1 à 5, caractérisée en ce que les résines époxy sont solides.

7. Produit de revêtement aqueux à base d'une ou plusieurs résines époxy pouvant être diluées avec de l'eau, ainsi qu'éventuellement de pigments, charges et additifs utilisés habituellement dans des peintures, caractérisé en ce qu'il contient une émulsion aqueuse selon l'une des revendications 1 à 6, ainsi qu'un ou plusieurs agents de réticulation de type polyamine pouvant être dilués avec de l'eau, et se trouve sous forme d'un système à deux composants, un composant contenant les résines époxy et l'autre contenant les agents de réticulation de type polyamine.

8. Produit de revêtement aqueux selon la revendication 7, caractérisé en ce qu'un composant contient une émulsion aqueuse selon l'une des revendications 1 à 6, qui a été préparée avec utilisation d'au moins une partie de l'ensemble des résines époxy utilisées pour le produit de revêtement.

9. Produit de revêtement aqueux selon la revendication 8, caractérisé en ce qu'il contient 20-70 % en poids d'une ou plusieurs résines époxy et un ou plusieurs agents de réticulation de type polyamine, 0,5-15 % en poids d'une ou plusieurs polyoléfines chlorées, 20-70 % en poids d'eau ainsi que 10-40 % en poids d'un ou plusieurs solvants organiques, et 0-53 % en poids d'un ou plusieurs autres liants pouvant être dilués avec de l'eau, les pourcentages en poids faisant au total 100 % en poids et le rapport des atomes d'hydrogène réactifs des agents de réticulation de type polyamine aux groupes époxy des résines époxy allant de préférence de 0,7:1 à 1,5:1.

10. Produit de revêtement aqueux selon la revendication 9, caractérisé en ce que les autres liants comprennent une ou plusieurs résines polyuréthanne.

11. Procédé pour la préparation d'une émulsion aqueuse selon l'une des revendications 1 à 6, caractérisé en ce que l'on disperse dans de l'eau
- une ou plusieurs résines époxy pouvant être diluées avec de l'eau, conjointement avec
- une ou plusieurs polyoléfines chlorées et
- un ou plusieurs solvants organiques ayant un point d'ébullition de 100-160°C,
en proportions telles que l'on obtient une émulsion ayant la composition suivante:
- 10-70 % en poids de résine époxy,
- 5-50 % en poids de solvant organique,
- 10-70 % en poids d'eau,
le rapport pondéral résine époxy/polyoléfine chlorée allant de 10:0,5 à 10:4,5 et les pourcentages en poids se rapportant dans chaque cas à l'émulsion aqueuse totale.

12. Procédé selon la revendication 11, caractérisé en ce que l'on utilise comme solvant un ou plusieurs solvants aromatiques.

13. Procédé selon la revendication 11 ou 12, caractérisé en ce que les résines époxy sont utilisées sous forme d'une dispersion aqueuse de résine époxy.

14. Procédé pour la préparation d'un produit de revêtement aqueux selon l'une des revendications 7 à 10, caractérisé en ce que l'on prépare une émulsion aqueuse selon l'une des revendications 1 à 6 avec un ou plusieurs pigments, une ou plusieurs charges, ainsi qu'éventuellement des additifs utilisés habituellement dans des peintures, et éventuellement une autre résine époxy ainsi qu'éventuellement un ou plusieurs autres liants pouvant être dilués avec de l'eau, et on ajoute au mélange, immédiatement avant l'emploi, un ou plusieurs agents de réticulation de type polyamine pouvant être dilués avec de l'eau, en choisissant les proportions de manière que soient présents 20 à 70 % en poids de résine époxy et d'agent de réticulation polyamine, 0,5 à 15 % en poids de polyoléfine chlorée, 20 à 70 % en poids d'eau, 10 à 40 % en poids de solvant organique et 0 à 53 % en poids d'un autre solvant pouvant être dilué avec de l'eau.

15. Procédé selon la revendication 14, caractérisé en ce qu'au moins une partie des composants, à l'exception des résines époxy, est mélangée avec le composant de réticulation de type polyamine.

16. Procédé pour la préparation d'un produit de revêtement aqueux selon la revendication 14 ou 15, caractérisé en ce que l'on ajoute, en tant qu'autre liant, une ou plusieurs résines polyuréthanne contenant des groupes carboxyle.

17. Procédé pour la préparation d'un produit de revêtement aqueux selon la revendication 14 ou 15, caractérisé en ce que l'on ajoute, comme autre liant, une ou plusieurs résines polyuréthanne non ioniques, auto-émulsifiables.

18. Utilisation des émulsions aqueuses selon l'une des revendications 1 à 6, pour la préparation de produits de revêtement aqueux.

19. Utilisation des produits de revêtement aqueux selon l'une des revendications 7 à 10, pour la préparation d'apprêts pour peintures multicouches.

20. Utilisation des produits de revêtement aqueux selon l'une des revendications 7 à 10, pour le revêtement de supports en matière en plastique.

21. Utilisation des produits de revêtement aqueux selon l'une des revendications 7 à 10, pour le revêtement de supports en polyoléfine, en particulier de ceux qui consistent en partie ou en totalité en polypropylène.

22. Supports en matière plastique, revêtus avec un produit de revêtement selon l'une des revendications 7 à 10.
